# EUROPÄISCHE PATENTSCHRIFT

(11) **EP 1 755 935 B1**
(45) Veröffentlichungstag und Bekanntmachung des Hinweises auf die Patenterteilung: **06.10.2010**
(21) Anmeldenummer: 05733574.7
(22) Anmeldetag: 06.04.2005
(51) Int. Cl.: B62D 15/02, B60Q 1/48

(54) **VERFAHREN UND VORRICHTUNG ZUM UNTERSTÜTZTEN EINPARKEN EINES KRAFTFAHRZEUGES**
METHOD AND DEVICE FOR ASSISTING THE PARKING OF A MOTOR VEHICLE
PROCEDE ET DISPOSITIF D'ASSISTANCE POUR GARER UN VEHICULE A MOTEUR

(30) Priorität: 05.06.2004 DE 102004027640
(43) Veröffentlichungstag der Anmeldung: 28.02.2007
(73) Patentinhaber: ROBERT BOSCH GMBH, 70442 Stuttgart (DE)
(72) Erfinder: DANZ, Christian, 70469 Stuttgart (DE); EGELHAAF, Jan, 71229 Leonberg (DE); LEE, Wei-Chia, 71229 Leonberg (DE); STEINER, Benjamin, 70619 Stuttgart (DE)
(86) Internationale Anmeldenummer: PCT/EP2005/051526
(87) Internationale Veröffentlichungsnummer: WO 2005/120932

(56) Entgegenhaltungen:
- EP-A- 1 361 458
- DE-A1- 10 109 680
- DE-A1- 10 136 410
- DE-A1- 10 338 255
- DE-A1- 19 646 559
- US-A- 4 931 930
- PATENT ABSTRACTS OF JAPAN Bd. 1999, Nr. 11, 30. September 1999 (1999-09-30) -& JP 11 157404 A (TOYOTA MOTOR CORP), 15. Juni 1999 (1999-06-15)
- PATENT ABSTRACTS OF JAPAN Bd. 2000, Nr. 16, 8. Mai 2001 (2001-05-08) -& JP 2001 010431 A (FUJITSU TEN LTD), 16. Januar 2001 (2001-01-16)

## Beschreibung

### Stand der Technik

Die Erfindung betrifft ein Verfahren sowie eine Vorrichtung zum unterstützten Einparken eines Kraftfahrzeuges in eine Parklücke, gemäss den Oberbegriffen der Ansprüche 1 und 7.

Aus der Praxis sind Fahrerassistenzsysteme bekannt, die einen Fahrer eines Kraftfahrzeuges beim Rangieren, beim Einparken und/oder beim Ausparken unterstützen und eine Sensorik umfassen, die die Umgebung des Kraftfahrzeuges erfasst und hierzu Ultraschallsensoren aufweisen kann. Insbesondere sind Systeme bekannt, die eine Parklückenvermessungseinrichtung eines Kraftfahrzeuges umfassen und mittels dieser den Fahrer beim Einparken in eine Parklücke unterstützen.

Beispielsweise aus der DE 198 09 416 A1 ist ein Einparkassistent bekannt, der den Fahrer bei einem längsseiten Rückwärts-Einpark-Vorgang in eine Parklücke zwischen zwei an einem Straßenrand geparkten Fahrzeuge unterstützt. Bei dem mit diesem System durchgeführten Verfahren wird eine potenzielle Parklücke angefahren und mittels an dem Kraftfahrzeug angeordneter Sensoren vermessen. Anschließend wird in Abhängigkeit von abgespeicherten Referenzwerten bestimmt, ob die Parklücke für einen Einparkvorgang des Kraftfahrzeuges hinreichend groß ist. Wenn dies der Fall ist, wird in Abhängigkeit von der Größe der Parklücke eine Einparkstrategie berechnet und dem Fahrer des Kraftfahrzeuges mitgeteilt. Dieser kann dann der vorgeschlagenen Einparkstrategie folgen, so dass lange und/oder erfolglose Einparkvorgänge vermeidbar werden.

Aus der DE 103 382 55 A1 ist eine Einparkhilfevorrichtung für ein Fahrzeug bekannt. Ein Fahrer wird bei einem Einparken dadurch unterstützt, dass er in einer vorgegebenen Bezugsposition stoppen soll, an der der Fahrer eine Soll-Einparkposition in einer Seitenrichtung des Fahrzeugs sehen kann. Dem Fahrer werden in einer Anzeige Markierungen dargestellt, die die erfasste Parklücke begrenzen. Ferner wird ihm die Soll-Einparkposition in der Anzeige dargestellt.

Aus der DE 10136 410 A1 ist ein Einparkhilfssystem bekannt, bei dem ein Fahrer für den Fall, dass eine innerhalb einer Tür vorgesehene Markierung mit einer Mittellinie der Zielparkposition übereinstimmt, bei einem Links-Rückwärts-Einparken unterstützt wird. Eine Anzeigeeinheit zeigt dann die Zielparkposition, die gegenwärtige Fahrzeugposition und eine erwartete Parkposition an. Darüber hinaus kann zusätzlich noch eine erwartete Ortskurve, die das Fahrzeug von der Startposition zu der Zielposition fahren soll, angezeigt werden.

Aus der JP 2001-010431 A sind ein Verfahren nach dem Oberbegriff des Anspruchs 1 und eine Vorrichtung nach dem Oberbegriff des Anspruchs 7 bekannt, bei den eine Kamera einen Rückraum hinter einem Fahrzeug beobachtet. Insbesondere kann dabei eine Einparksituation dargestellt werden. In ein Kamera-Anzeigebild kann dann der derjenige Fahrweg einprojiziert werden, der in idealer Weise zu einer Zielposition führt. Ferner kann derjenige Weg eingeblendet werden, der von dem Fahrzeug ausgehend von einer aktuellen Einstellung des Lenkrades wahrgenommen würde.

Grundsätzlich ist es von Bedeutung, ob das Kraftfahrzeug zu Beginn eines Einparkvorgangs parallel zur Ausrichtung der an die Parklücke angrenzenden Kraftfahrzeuge bzw. parallel zum angrenzenden Bordstein orientiert ist. Wenn dies nicht gegeben ist, erfolgt in letzterem Fall bei der Vorgabe einer Einparkstrategie eine Korrektur der Ausrichtung, d. h. des Gierwinkels, zwischen der Fahrzeuglängsachse und dem Bordstein. Nach Beendigung des Einparkvorganges ist das Fahrzeug parallel zum Bordstein ausgerichtet, d. h. der Gierwinkel beträgt 0°.

Es wurde vorgeschlagen, die Berechnung eines Einparkpfades mit so genannten Klothoiden vorzunehmen. Dabei erfolgt die Korrektur des Gierwinkels durch Verkürzung oder Verlängerung des ersten Kreisbogens, dem während des Einparkens zu folgen ist und dem eine so genannte Startklothoide zugeordnet ist. Wenn dann die Flächen unterhalb der durch die Startklothoide und eine so genannte Wendeklothoide wiedergegebenen Lenkwinkelverläufe gleich groß sind, kann von einem so genannten parallelen Einparken gesprochen werden, da in diesem Falle die Integration der Lenkwinkelverläufe den Gierwinkel angibt. Wird nun der erste Kreisbogen, dem zu folgen ist, verändert, kann das Fahrzeug trotz eines von 0° abweichenden Anfangsgierwinkels parallel zum Bordstein ausgerichtet geparkt werden.

Des Weiteren besteht bei einem Einparkvorgang das Problem, dass nach einem Passieren der Parklücke das Kraftfahrzeug meistens schief gegenüber dem Bordstein ausgerichtet ist, da es für den Fahrer häufig schwierig ist, das Kraftfahrzeug parallel zum Bordstein zu bewegen. Dieser Schiefstand muss dann während des Einparkvorgangs korrigiert werden. Bei Variation des ersten zu folgenden Kreisbogens zur Korrektur des Anfangsgierwinkels, d. h. bei Veränderung der Bogenlänge der so genannten Trajektorie, kann es unter Umständen zu Kollisionen des Kraftfahrzeuges mit an die Parklücke angrenzenden Kraftfahrzeugen kommen. Zur Vermeidung solcher Kollisionen müsste also eine sehr aufwendige Berechnungsstrategie zur Berücksichtigung des Anfangsgierwinkels eingesetzt werden.

Der Erfindung liegt die Aufgabe zugrunde, ein gegenüber dem Stand der Technik optimiertes Verfahren und eine entsprechende Vorrichtung zum unterstützten Einparken eines Kraftfahrzeuges in eine Parklücke zu schaffen.

### Vorteile der Erfindung

Bei dem erfindungsgemäßen Verfahren zum unterstützten Einparken eines Kraftfahrzeuges in eine Parklücke wird die Parklücke angefahren und mittels an dem Kraftfahrzeug angeordneter Sensoren vermessen. Ausgehend hiervon wird ein Soll-Einparkpfad berechnet und auf einem Display angezeigt Gleichzeitig wird während des Einparkens der Ist-Einparkpfad auf dem Display angezeigt, so dass der Ist-Einparkpfad an den Soll-Einparkpfad angeglichen werden kann.

Das erfindungsgemäße Verfahren erleichtert dem Fahrer des betreffenden Kraftfahrzeuges das Verständnis des Parkvorgangs und vermittelt ihm durch die visuelle Anzeige auf dem Display die richtige Vorgehensweise beim Einparken. Als Display kann ein in dem Kraftfahrzeug ohnehin vorhandenes Display, beispielsweise ein Display eines Navigationssystems, genutzt werden.

Das Verfahren nach der Erfindung kann von einem Fahrer des betreffenden Kraftfahrzeuges beispielsweise aktiviert werden, wenn er bei einem längsseitigen Rückwärtseinparkvorgang in eine Parklücke zwischen zwei an einem Straßenrand geparkten Fahrzeugen unterstützt werden möchte. Dabei kann bei einem ersten in Vorwärtsrichtung erfolgenden längsseitigen Vorbeifahren an der Parklücke zunächst mittels geeigneter Abstandsensoren, die beispielsweise als Ultraschallsensoren ausgebildet sind, die Parklückenlänge ermittelt werden. Gleichzeitig kann die von dem Fahrzeug gefahrene Wegstrecke kontinuierlich aufgezeichnet werden. Nach dem Passieren der Parklücke kann der Fahrer dann aufgefordert werden, anzuhalten und zurückzusetzen. Durch Anwendung des erfindungsgemäßen Verfahrens bzw. ein dieses Verfahren nutzenden Systems kann dann dem Fahrer während des Zurücksetzen laufend eine Hilfestellung gegeben werden, um mit möglichst wenig Lenk- und Rangieraufwand kollisionsfrei in die Parklücke einzuparken. Die Lenk-, Beschleunigungs- und Bremsvorgänge werden dabei von dem Fahrer des betreffenden Fahrzeugs vorzugsweise selbst durchgeführt.

Damit der Fahrer des Kraftfahrzeuges den Soll-Einparkpfad möglichst genau folgen kann, werden bei einer bevorzugten Ausführungsform des Verfahrens nach der Erfindung die zum Einhalten des Soll-Einparkpfades erforderlichen Manöver vorzugsweise auf dem Display vorgegeben. Diese Manöver umfassen Lenk-, Beschleunigungs- und Bremsvorgänge, mittels welcher der Ausgleich des Ist-Einparkpfads an den Soll-Einparkpfad erfolgt, d. h. die jeweiligen so genannten Trajektorien auf dem Display übereinander gebracht werden.

Um dem Fahrer eine möglichst anschauliche Darstellung des Einparkvorgangs zu vermitteln, wird die vermessene Parklücke zusammen mit dem Ist-Einparkpfad und dem Soll-Einparkpfad vorzugsweise als schematische Draufsicht, d. h. nach Art einer so genannten Birdview-Darstellung auf dem Display abgebildet. Eine derartige, leicht interpretierbare und transparente Darstellung, anhand derer der Fahrer sehen kann, wie er lenken, beschleunigen und/oder abbremsen muss, erhöht auch die Akzeptanz und Zufriedenheit beim Kunden.

Um dem Fahrer ein weiteres Sicherheitsinstrument an die Hand zu geben, können die durchgeführten Fahrmanöver bei korrekter Durchführung akustisch und/oder optisch z. B. durch Textanzeige in einem Textfeld oder durch Aufleuchten einer farbigen Anzeige und/oder haptisch bestätigt werden.

Um die Vermessung der Parklücke und damit die Berechnung des Soll-Einparkpfades optimiert durchführen zu können, ist das Verfahren nach der Erfindung so ausgelegt, dass bei einem Passieren der Parklücke ein Anfangsgierwinkel des Kraftfahrzeuges bezüglich der Erstreckung der Parklücke vorgegeben wird. Der Anfangsgierwinkel wird dabei vorzugsweise schon während einer Längsvorbeifahrt an der Parklücke derart eingestellt, dass das Kraftfahrzeug optimal bezüglich der Parklücke ausgerichtet ist, und zwar schon bevor der eigentliche Einparkvorgang begonnen wird.

Insbesondere bei einer parallel zu einem Straßenrand ausgerichteten Parklücke beträgt der vorgegebene Anfangsgierwinkel vorzugsweise etwa 0°. Das Kraftfahrzeug wird also dann vor Beginn des Parkvorgangs parallel beispielsweise zu einem Bordstein ausgerichtet. Auch wirkt sich eine parallele Vorbeifahrt an einer Parklücke positiv auf eine mittels der als Umfeldsensorik ausgebildeten Sensorik erfolgende Messdatenaufnahme aus, da dann bei einer Vermessung der Parklücke mittels Ultraschallwellen eine senkrechte Reflexion erfolgt, was zu einer Verkürzung der Messstrecke und einer Erhöhung der Messgenauigkeit führt.

Eine parallel zu der Erstreckung der betreffenden Parklücke verlaufende Orientierung des Kraftfahrzeuges bewirkt auch, dass eine Korrektur eines Anfangsgierwinkels schon während des Passierens der Parklücke durchgeführt wird und nicht mehr bei der Berechnung des Soll-Einparkpfades berücksichtigt werden muss. Dies verringert den Rechenaufwand zur Ermittlung des Soll-Parkpfades erheblich. Zur Einstellung des Anfangsgierwinkels werden beispielsweise optische, akustische und/oder haptische Signale für den Fahrer bereitgestellt, mittels derer der Fahrer auf einen vorzugsweise parallel zum Straßenrand bzw. Bordstein ausgerichteten Pfad geführt wird, bevor das eigentliche Einparkmanöver gestartet wird. Der Fahrer reguliert also den Anfangsgierwinkel.

Beispielsweise können dem Fahrer auf einem Display Informationen zur Verfügung gestellt werden, mittels derer er sein Kraftfahrzeug auf eine gerade Vorbeifahrbahn zurückführen kann, falls er von dieser Bahn abgewichen ist. Natürlich kann hierzu auch jedes andere geeignete so genannte Human Machine Interface (HMI) genutzt werden, das nach einem optischen, akustischen oder haptischen Prinzip arbeitet und beispielsweise den aktuellen Gierwinkel zwischen der Fahrzeuglängsachse und dem Parklückenrand anzeigt, so dass das Fahrzeug noch während einer Längsvorbeifahrt an der Parklücke parallel zum Parklückenrand ausgerichtet werden kann.

Im Falle einer akustischen HMI kann die Mitteilung des jeweils aktuellen Gierwinkels beispielsweise über eine stereofähige Radioanlage des Kraftfahrzeuges erfolgen. Dem Fahrer wird dann je nach Gierwinkel ein entsprechender Ton über einen links oder einen rechts angeordneten Lautsprecher übermitteln. Wenn kein Ton generiert wird, ist das Kraftfahrzeug im Rahmen von Tolleranzen bereits parallel zum Parklückenrand ausgerichtet. Im Falle eines visuellen HMI kann dem Fahrer eine Fehlstellung des Fahrzeugs auf einem Display mitgeteilt werden, wobei ein Vorschlag für ein Konrekturmanöver mittels eines beispielsweise farbigen Pfeils angezeigt werden kann. Bei einer speziellen Ausführungsform des Verfahrens nach der Erfindung kann die Einhaltung des Gierwinkels unter Nutzung eines so genannten urbanen Adaptive Cruise Control-Systems erfolgen, mittels dessen der Abstand zu anderen Verkehrsteilnehmern bzw. zum Straßenrand regelbar ist und die Fahrzeugausrichtung in Abhängigkeit von Straßenranderhebungen unter Verwendung einer Ultraschallsensorik vorgenommen wird. In diesem Zusammenhang kann auch ein Aktuator eingesetzt werden, der das Lenkrad des Kraftfahrzeuges ansteuert und so eine automatische Einstellung des Gierwinkels vornimmt. Die Einstellung des Gierwinkels erfolgt mittels einer elektronischen Steuerhilfe. Auf diese Art und Weise muss also der Fahrer nicht aktiv eingreifen, um das Kraftfahrzeug optimal auszurichten.

Die Erfindung hat auch eine Vorrichtung gemäß dem Anspruch 7 zum Gegenstand. Das durch die Vorrichtung nach der Erfindung bereitgestellte Anzeigekonzept erleichtert dem Fahrer des Kraftfahrzeuges das Verständnis des Parkprozesses und die richtige Vorgehensweise beim Einparken.

Die erfindungsgemäße Vorrichtung stellt ein Einparkassistenzsystem dar, das für einen Nutzer leicht interpretietbar ist und vorzugsweise während oder auch kurz vor dem Anfahren einer Parklücke einschaltbar und jederzeit ausschaltbar ist. Denkbar ist es natürlich auch, die Vorrichtung nach der Erfindung mit einer automatischen Zuschaltung zu versehen.

Um dem Nutzer der erfindungsgemäßen Vorrichtung hinsichtlich der durchgeführten Manöver weiter zu unterstützen, kann die Vorrichtung einen akustischen Signalgeber umfassen.

Um bei einem Einparkvorgang nicht versehentlich mit Hindernissen, beispielsweise mit an die Parklücke angrenzenden Kraftfahrzeugen zu kollidieren, ist es vorteilhaft, wenn die Vorrichtung Abstandssensoren zur Detektion von Hindernissen umfasst. Diese Sensoren können auch in dem Fall genutzt werden, in dem das eingeparkte Kraftfahrzeug zu nahe an einem angrenzenden Kraftfahrzeug steht. Der Fahrer kann dann aufgefordert werden, die Räder in eine Geradeausstellung zu bringen und das Kraftfahrzeug ein Stück zu verfahren, so dass es in der Parklücke mittig zum Stehen kommt.

Des Weiteren kann die Vorrichtung nach der Erfindung so ausgelegt sein, dass auf dem Display der voraussichtliche Ist-Einparkpfad in Abhängigkeit von dem mittels des Lenkwinkelsensors ermittelten aktuellen Lenkwinkels dargestellt wird. Der Fahrer ist dann angehalten, durch entsprechende Lenkbewegungen den voraussichtlichen Ist-Einparkpfad mit dem Soll-Einparkpfad in Übereinstimmung zu bringen.

### Zeichnung

Weitere Vorteile und vorteilhafte Weiterbildungen des Gegenstandes und der Erfindung sind der Beschreibung, der Zeichnung und den Patentansprüchen entnehmbar.

Ein Ausführungsbeispiel der Vorrichtung nach der Erfindung wird zusammen mit einem Ausführungsbeispiel des Verfahrens nach der Erfindung in der Zeichnung schematisch vereinfacht dargestellt und in der nachfolgenden Beschreibung näher erläutert. Es zeigen
Figur 1 ein Kraftfahrzeug, das mit einer Vorrichtung nach der Erfindung versehen ist;
Figur 2 eine Displayanzeige während einer ersten Einparkphase;
Figur 3 eine Displayanzeige während einer zweiten Einparkphase;
Figur 4 eine Displayanzeige während einer dritten Einparkphase;
Figur 5 eine Displayanzeige während einer vierten Einparkphase;
Figur 6 eine Displayanzeige während einer fünften Einparkphese;
Figur 7 eine Displayanzeige während einer sechsten Einparkphase;
Figur 8 eine Displayanzeige bei Beendigung eines Einparkvorgangs;
Figur 9 ein Blockschaltbild zur Einstellung eines Anfangsgierwinkels;
Figur 10 ein Display bei der Einstellung des Anfangsgierwinkels;
Figur 11 eine Situation einer Vermessung einer Parklücke, die an einen Bordstein grenzt;
Figur 12 eine Situation einer Vermessung einer Parklücke ohne sichtbaren Bordstein; und
Figur 13 eine Situation einer Vermessung einer Parklücke, die in einer Kurve liegt.

### Beschreibung des Ausführungsbeispiels

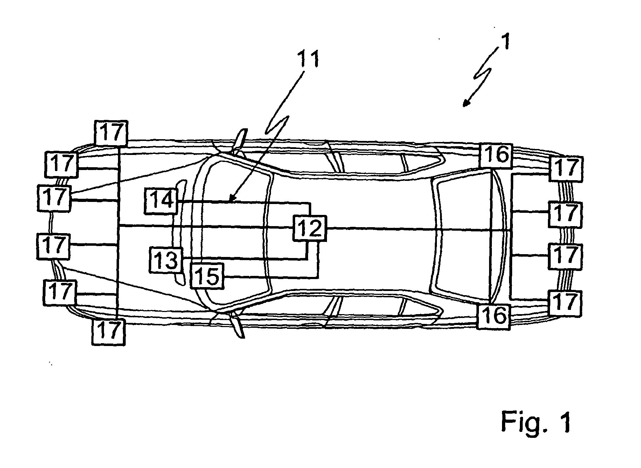

In Fig. 1 ist ein Kraftfahrzeug 1 dargestellt, das mit einer Vorrichtung 11 zum unterstützten Einparken des Kraftfahrzeuges 1 in eine Parklücke ausgestattet ist. Mittels der Vorrichtung 11 ist auch das erfindungsgemäße Verfahren durchführbar.

Die Vorrichtung 11 umfasst ein elektronisches Steuergerät 12, einen beispielsweise als Radimpulszähler (RIZ) ausgebildeten Wegsignalgeber 13, einen Lenkwinkelsensor 14, den gegebenenfalls auch ein Gierratensensor zugeordnet sein kann, sowie ein als Display ausgebildetes, so genanntes Human Machine Interface 15. Das Display 15 kann das Display eines Navigationssystems, eines Kombiinstruments oder eines Zentraldisplays sein. Des Weiteren ist die Vorrichtung 11 mit als Ultraschallsensoren ausgebildeten Sensoren 16, die an beiden Fahrzeugseiten im Bereich einer Hinterachse des Kraftfahrzeuges 1 angeordnet sind, sowie mit frontseitig und heckseitig angeordneten Abstandssensoren 17 versehen. Der Wegsignalgeber 13, der Lenkwinkelsensor 14, das Display 15, die Ultraschallsensoren 16 und die Abstandssensoren 17 sind jeweils mit dem elektronischen Steuergerät 12 verbunden.

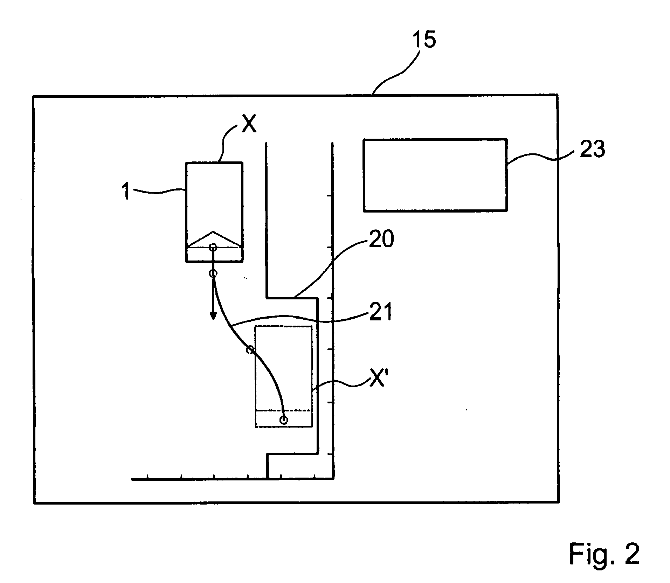

Ein mittels der Vorrichtung 11 durchführbarer Einpark-Prozess ist anhand der Figuren 2 bis 8 dargestellt, wobei die jeweilige Einparksituation auf dem Display 15 in einer so genannten Birdview-Darstellung für den Fahrer des Kraftfahrzeuges 1 dargestellt wird. Dabei wird zum einen eine für einen Parkvorgang ausgewählte und mittels der Ultraschallsensoren 16 vermessene Parklücke 20, das Kraftfahrzeug 1 in seiner aktuellen Position X sowie in seiner in der Parklücke 20 angeordneten Position X' dargestellt. Zudem erfolgt auf dem Display 15 eine Wiedergabe eines Sollparkpfades 21 sowie eines Ist-Parkpfades 22. Ferner erfolgt eine Anzeige des zum Einhalten des Soll-Parkpfades 21 erforderlichen Manövers in Schriftform sowie anhand von Pfeilen.

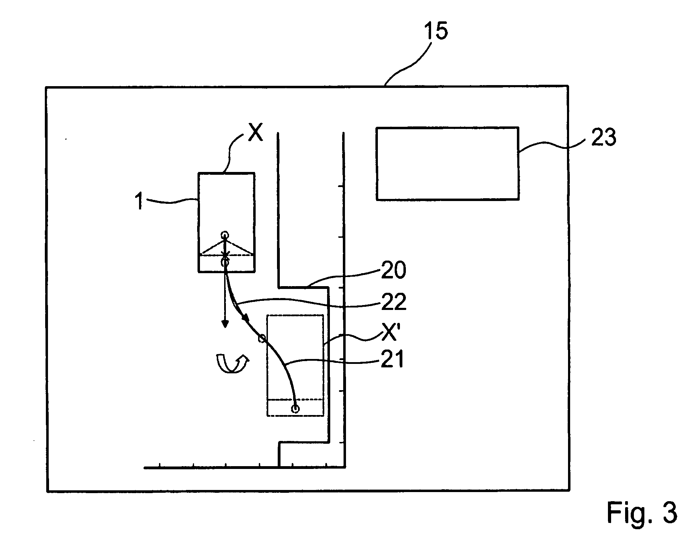

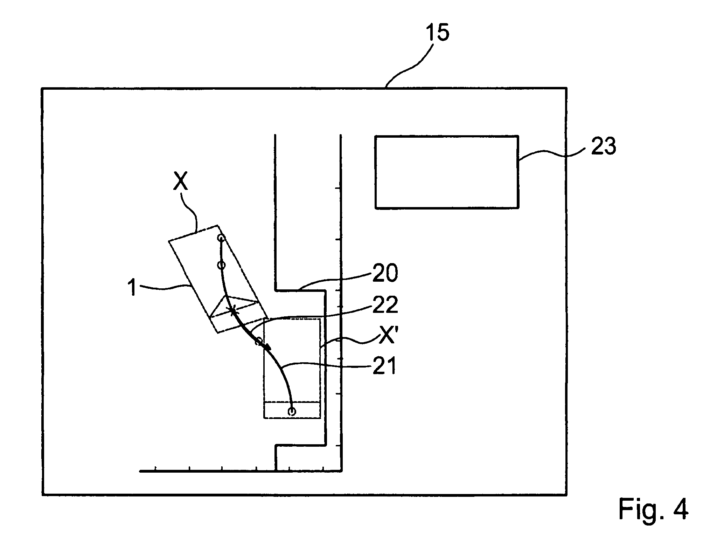

Bei der in Figur 2 dargestellten ersten Einparkphase wird der Fahrer durch eine geeignete Aufforderung in einem Textfeld 23 wie z. B. "GERADE RÜCKSETZEN" aufgefordert, das Fahrzeug gerade zurückzusetzen. Daraufhin setzt der Fahrer das Kraftfahrzeug 1 parallel zur Ausrichtung der Parklücke 20 nach hinten zurück, bis er an einem ersten Lenkumkehrpunkt angekommen ist und ein Signal ausgegeben wird bzw. ein Gong ertönt, wie anhand von Figur 3 dargestellt ist. Dabei wird in dem Textfeld 23 z. B. der Befehl "GERADE RÜCKSETZEN BIS SIGNALTON ERTÖNT" angezeigt. Bei Ertönen des Signaltons stoppt der Fahrer das Kraftfahrzeug, worauf auf dem Display 15 entsprechend Figur 4 die Aufforderung "LENKRAD NACH RECHTS EINSCHLAGEN BIS SIGNALTON ERTÖNT" in dem Textfeld 23 angezeigt wird. Es erfolgt also ein erstes Umlenken im Stand.

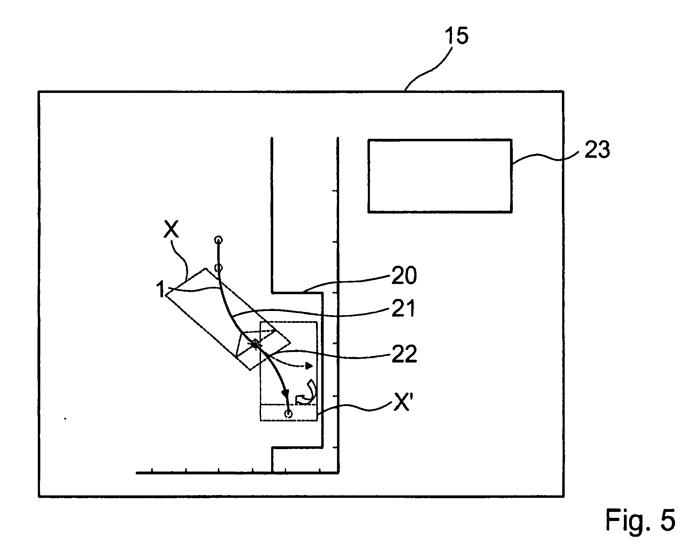

Anschließend muss der Fahrer das Kraftfahrzeug nun mit dem eingeschlagenen Lenkwinkel weiter zurücksetzen, bis ein erneuter Signalton bzw. Gong ertönt. Hierzu wird der Fahrer anhand des Befehls "RÜCKSETZEN BIS SIGNALTON ERTÖNT" im Textfeld 23 des in Figur 5 dargestellten Displays aufgefordert.

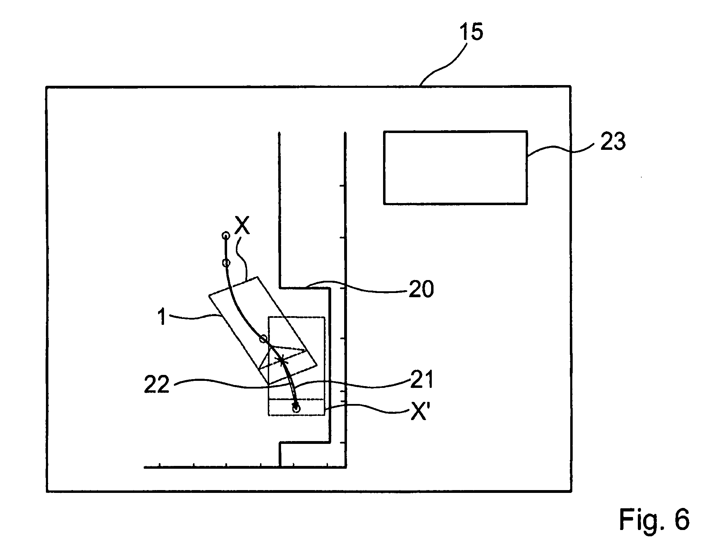

Nach dem Stopp des Kraftfahrzeuges 1 erfolgt ein zweites Umlenken im Stand, wobei bei Erreichen der korrekten Lenkradstellung wiederum ein Signalton bzw. Gong ertönt. Die Aufforderung hierzu erfolgt mit einem Befehl "LENKRAD NACH LINKS EINSCHLAGEN BIS SIGNALTON" im Textfeld 23 der in Figur 6 dargestellten Anzeige auf dem Display 15.

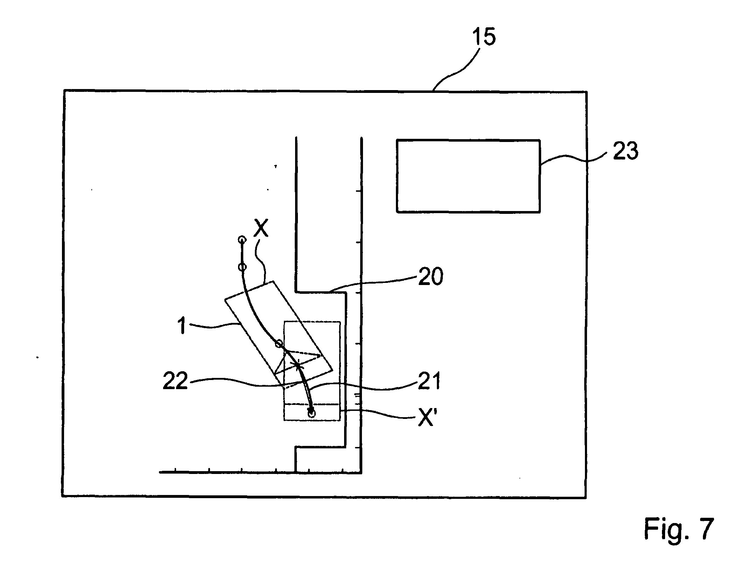

Nach entsprechend erfolgter Fahrzeugbewegung, welche auf dem Display 15 gemäß Figur 7 ersichtlich ist, erfolgt zum Abschließen des Einparkvorganges in dem Textfeld 23 die Aufforderung "RÜCKSETZEN BIS SIGNALTON ERTÖNT". Dieses Zurücksetzen des Kraftfahrzeuges bis zu einem erneuten Ertönen eines Signaltons erfolgt mit dem im vorhergehenden Schritt gewählten Lenkwinkel.

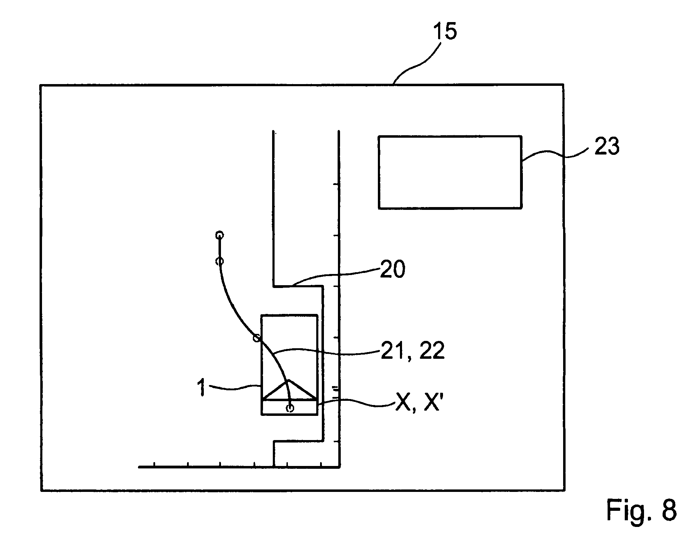

Bei Ertönen des letzteren Signaltons bzw. Gongs ist das Kraftfahrzeug 1 korrekt in der Parklücke angeordnet. Dies wird dem Fahrer, wie anhand Figur 8 dargestellt, angezeigt und mit einem Schriftzug "PARKVORGANG BEENDET" im Textfeld 23 mitgeteilt. Der Fahrer kann dann bei Bedarf bzw. auf Wunsch die Räder noch gerade stellen.

Falls die Parklücke knapp bemessen ist und das Kraftfahrzeug sehr nahe an einem an der Fahrzeugrückseite angrenzenden Fahrzeug steht, kann er nun mittels der Vorrichtung 11 aufgefordert werden, die Räder gerade zu stellen und wieder ein Stück gerade nach vorne zu fahren, so dass das Kraftfahrzeug 1 mittig in der Parklücke 20 zum Stehen kommt. Neben dem Soll-Einparkpfad 21 wird jeweils in Abhängigkeit von dem aktuellen Lenkwinkel der voraussichtliche Einparkpfad dargestellt. Aufgabe des Fahrers ist es den voraussichtlichen Einparkpfad mit dem Soll-Einparkpfad durch Lenken übereinander zu bringen.

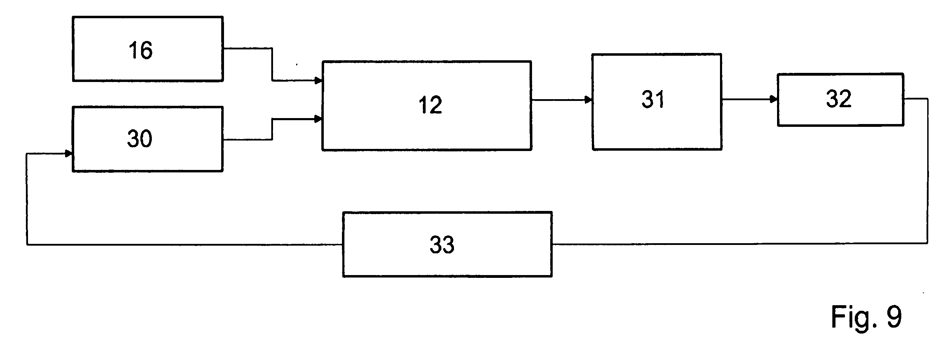

Anhand der Figuren 9 bis 13 wird nun die Ausrichtung des Kraftfahrzeuges 1 bezüglich eines optimalen Anfangsgierwinkels gegenüber der Längserstreckung einer Parklücke erläutert. Hierzu werden, wie in Figur 9 anhand eines Blockschaltbilds dargestellt ist, mittels der Ultraschallsensoren 16 die Abmessungen der jeweiligen Parklücke ermittelt, wobei die ermittelten Messdaten in Echtzeit in der Steuereinheit 12 zusammen mit Fahrzeugdaten 30, die von einem Radimpulszähler, von einem Lenkwinkelsensor und dergleichen geliefert werden können, ausgewertet werden. Mittels eines so genannten Human Machine Interface 31, beispielsweise eines Displays, wird dann dem Fahrer der aktuelle Gierwinkel 32 mitgeteilt. Dieser kann dann in einem Schritt 33 den Lenkwinkel korrigieren, so dass die Fahrzeugdaten 30 entsprechend modifiziert werden und das Kraftfahrzeug 1 den gewünschten Anfangsgierwinkel einnehmen kann.

Neben dem Einsatz der Ultraschallsensoren 16 kann noch ein Gierwinkelsensor eines elektronischen Stabilitätsprogamms (ESP) abgeglichen werden und als weitere Fahrzeuginformation genutzt werden.

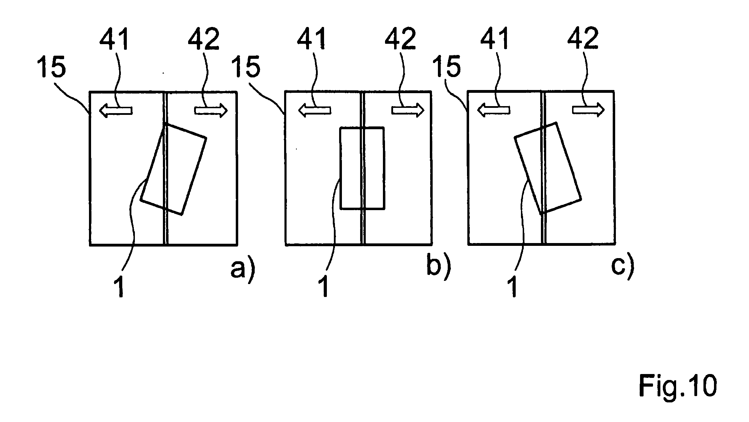

Anhand Figur 10 sind die auf dem Display 15 dargestellten Hilfen für den Fahrer 32 gezeigt. In Figur 10a weicht das Kraftfahrzeug 1 von einer Parallelstellung ab. Diese kann durch ein Einschlagen des Lenkrades nach links korrigiert werden. Zur Anzeige des erforderlichen Manövers blinkt ein nach links weisender Pfeil 41 farbig auf. In Figur 10b ist das Kraftfahrzeug 1 in einer parallel zur Erstreckung der Parklücke ausgerichteten Stellung, so dass weder der Pfeil 41 noch ein zur Aufforderung einer Rechtslenkung dienender Pfeil 42 aufblinkt. In Figur 10c muss das Kraftfahrzeug 1 zur Einstellung eines Gierwinkels von 0° nach rechts gelenkt werden. Um den Fahrer 32 hierzu aufzufordern, blinkt der nach rechts weisende Pfeil 42.

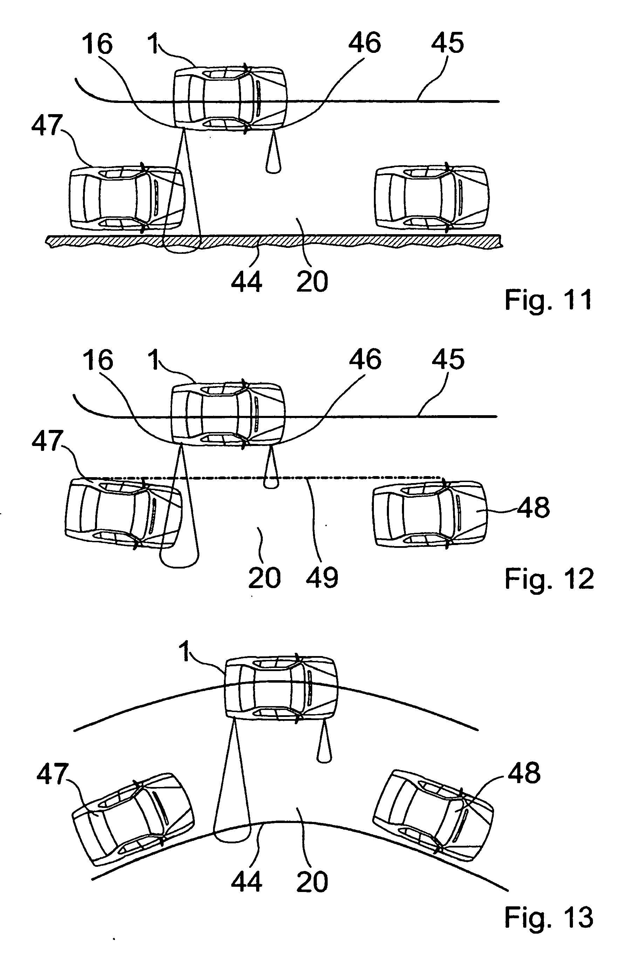

In Figur 11 ist eine Situation einer Vermessung einer Parklücke 20 dargestellt, die an einen Bordstein 44 grenzt. Das Fahrzeug 1 fährt hierbei entlang eines Pfades 45, auf dem es mittels der anhand der Figuren 9 und 10 dargestellten Funktionalität gehalten wird, an der Parklücke 20 vorbei, so dass diese mittels der Ultraschallsensoren 16 im Bereich der Hinterachse des Kraftfahrzeuges 1 und gegebenenfalls mittels Ultraschallsensoren 46 im Bereich der Vorderachse des Kraftfahrzeuges 1 vermessen wird. Zur Bestimmung des Gierwinkels des Kraftfahrzeuges dient zunächst ein rückseitig an die Parklücke 20 angrenzende Kraftfahrzeug 47 und dann der Bordstein 44.

Anhand Figur 12 ist eine Situation dargestellt, bei der eine Parklücke 20 zwischen zwei Kraftfahrzeugen 47 und 48 liegt, wobei kein Bordstein ausgebildet ist. Das Kraftfahrzeug 1 orientiert sich mit seinen Ultraschallsensoren 16 und 46 an den geparkten Fahrzeugen 47 und 48. Wenn die Fahrzeuge 47 und 48 schief in ihrer jeweiligen Parklücke stehen, wird mittels der jeweils am weitesten in die Straße weisenden Punkte der Fahrzeuge 47 und 48 eine Referenzlinie 49 erzeugt.

Anhand Figur 13 ist ein Sonderfall eines Einparkens in eine in einer Kurve liegenden Parklücke 20 dargestellt. Hier wird das Kraftfahrzeug 1 parallel zu benachbart zu der Parklücke 20 parkenden Kraftfahrzeugen 47 und 48 bzw. parallel zu einem Bordstein 44 ausgerichtet, wobei Parallelität im vorliegenden Fall bedeutet, dass ein konstanter Abstand zu den Hindernisse darstellenden Kraftfahrzeugen 47 und 48 bzw. zum Bordstein 44 eingehalten wird.

## Patentansprüche

1. Verfahren zum unterstützten Einparken eines Kraftfahrzeuges (1) in eine Parklücke (20), umfassend folgende Schritte:
- Anfahren der Parklücke (20);
- Vermessen der Parklücke (20) mittels an dem Kraftfahrzeug (1) angeordneter Sensoren (16,46),
Berechnen eines Soll-Einparkpfades (21) und Anzeige des Soll-Einparkpfades (21) auf einem Display (15) und
Anzeigen des Ist-Einparkpfades (22) auf dem Display (15), so dass das der Ist-Einparkpfad (22) an den Soll-Einparkpfad (21) angepasst werden kann, **dadurch gekennzeichnet, dass** bei einem Passieren der Parklücke (20) ein Anfangsgierwinkel des Kraftfahrzeuges (1) bezüglich der Erstreckung der Parklücke (20) vorgegeben wird und dass die Einstellung des Anfangsgierwinkels mittels einer elektronischen Steuerhilfe erfolgt.

2. Verfahren nach Anspruch 1, **dadurch gekennzeichnet, dass** vorzugsweise auf einem Display (15) Fahrmanöver vorgegeben werden, die zum Einhalten des Soll-Einparkpfades (21) erforderlich sind.

3. Verfahren nach Anspruch 1 oder 2, **dadurch gekennzeichnet, dass** die vermessene Parklücke (20) zusammen mit dem Ist-Einparkpfad (22) und dem Soll-Einparkpfad (1) als schematische Draufsicht auf dem Display (15) abgebildet wird.

4. Verfahren nach einem der Ansprüche 1 bis 3, **dadurch gekennzeichnet, dass** das Display (15) ein Display eines Navigationssystems ist.

5. Verfahren nach einem der Ansprüche 1 bis 4, **dadurch gekennzeichnet, dass** die durchgeführten Manöver bei korrekter Durchführung akustisch und/oder optisch und/oder haptisch bestätigt werden.

6. Verfahren nach einem der vorhergehenden Ansprüche, **dadurch gekennzeichnet, dass** der Anfangsgierwinkel etwa 0° beträgt.

7. Vorrichtung zum unterstützen Einparken eines Kraftfahrzeuges (1) in eine Parklücke (20), umfassend eine Sensorik (16,46), eine Steuereinheit (12), ein Display (15), einen Lenkwinkelsensor (14) und einen Wegsignalgeber (13), wobei auf dem Display (15) eine Anzeige eines Soll-Einparkpfads (21) und eines Ist-Einparkpfads (22) erfolgt, **gekennzeichnet durch** eine Funktionalität zur Einstellung eines Anfangsgierwinkels und dass die Funktionalität zur Einstellung des Anfangsgierwinkels mit einer elektrischen Lenkeinrichtung zusammenwirkt.

8. Vorrichtung nach Anspruch 7, **gekennzeichnet durch** einen akustischen Signalgeber.

9. Vorrichtung nach Anspruch 7 oder 8, **gekennzeichnet durch** Abstandssensoren (17) zur Detektion von Hindernissen.

10. Vorrichtung nach einem der vorhergehenden Ansprüche 7-9, **dadurch gekennzeichnet, dass** die Funktionalität zur Einstellung des Anfangsgierwinkels beim Passieren der Parklücke (20) aktiv ist.

## Claims

1. Method for assisting the parking of a motor vehicle (1) into a parking space (20), comprising the following steps:
- driving towards the parking space (20);
- measuring the parking space (20) by means of sensors (16, 46) arranged on the motor vehicle (1),
- calculation of a setpoint parking path (21) and display of the setpoint parking path (21) on a display (15), and
- display of the actual parking path (22) on the display (15) so that the actual parking path (22) can be adapted to the setpoint parking path (21), **characterized in that** when the vehicle passes the parking space (20), an initial yaw angle of the motor vehicle (1) with respect to the extent of parking space (20) is predefined, and **in that** the setting of the initial yaw angle is carried out by means of an electronic control aid.

2. Method according to Claim 1, **characterized in that** driving manoeuvres which are necessary for complying with the setpoint parking path (21) are preferably predefined on a display (15).

3. Method according to Claim 1 or 2, **characterized in that** the parking space (20) which is measured is represented together with the actual parking path (22) and the setpoint parking path (21) as a schematic plan view on the display (15).

4. Method according to one of Claims 1 to 3, **characterized in that** the display (15) is a display of a navigation system.

5. Method according to one of Claims 1 to 4, **characterized in that** the manoeuvres which are carried out are confirmed acoustically and/or visually and/or haptically when the execution is correct.

6. Method according to one of the preceding claims, **characterized in that** the initial yaw angle is approximately 0°.

7. Device for assisting the parking of a motor vehicle (1) into a parking space (20), comprising a sensor system (16, 46), a control unit (12), a display (15), a steering angle sensor (14) and a travel signal generator (13), wherein a setpoint parking path (21) and an actual parking path (22) are displayed on the display (15), **characterized by** a functionality for setting an initial yaw angle, and in that the functionality for setting the initial yaw angle interacts with an electric steering apparatus.

8. Device according to Claim 7, **characterized by** an acoustic signal generator.

9. Device according to Claim 7 or 8, **characterized by** distance sensors (17) for detecting obstacles.

10. Device according to one of the preceding Claims 7-9, **characterized in that** the functionality for setting the initial yaw angle is active when the vehicle passes the parking space (20).

## Revendications

1. Procédé d'assistance au stationnement d'un véhicule automobile (1) dans un emplacement de stationnement (20), comprenant les étapes suivantes :
- Arrivage à l'emplacement de stationnement (20) ;
- Mesure de l'emplacement de stationnement (20) au moyen de capteurs (16, 46) disposés sur le véhicule automobile (1) ;
- Calcul d'un trajet d'entrée en stationnement de consigne (21) et affichage du trajet d'entrée en stationnement de consigne (21) sur un afficheur (15) et
- Affichage du trajet d'entrée en stationnement réel (22) sur l'écran d'affichage (15) de sorte que le trajet d'entrée en stationnement réel (22) puisse être adapté au trajet d'entrée en stationnement de consigne (21),
**caractérisé en ce que** lors d'un passage à côté de l'emplacement de stationnement (20), un angle de lacet initial du véhicule automobile (1) par rapport à la projection de l'emplacement de stationnement (20) est prédéfini et que le réglage de l'angle de lacet initial s'effectue au moyen d'un auxiliaire de commande électronique.

2. Procédé selon la revendication 1, **caractérisé en ce que** les manoeuvres de conduite qui sont nécessaires pour suivre le trajet d'entrée en stationnement de consigne (21) sont de préférence indiquées à l'avance sur un écran d'affichage (15).

3. Procédé selon la revendication 1 ou 2, **caractérisé en ce que** l'emplacement de stationnement (20) mesuré est représenté conjointement avec le trajet d'entrée en stationnement réel (22) et le trajet d'entrée en stationnement de consigne (21) sous la forme d'une vue de dessus schématique sur l'écran d'affichage (15).

4. Procédé selon l'une des revendications 1 à 3, **caractérisé en ce que** l'écran d'affichage (15) est un écran d'affichage d'un système de navigation.

5. Procédé selon l'une des revendications 1 à 4, **caractérisé en ce que** les manoeuvres exécutées sont confirmées de manière sonore et/ou visuelle et/ou tactile si elles sont exécutées correctement.

6. Procédé selon l'une des revendications précédentes, **caractérisé en ce que** l'angle de lacet initial est égal à environ 0°.

7. Dispositif d'assistance au stationnement d'un véhicule automobile (1) dans un emplacement de stationnement (20), comprenant un dispositif de détection (16, 46), une unité de commande (12), un écran d'affichage (15), un détecteur d'angle de direction (14) et un générateur de signal de course (13), un affichage d'un trajet d'entrée en stationnement de consigne (21) et d'un trajet d'entrée en stationnement réel (22) ayant lieu sur l'écran d'affichage (15), **caractérisé par** une fonctionnalité de réglage d'un angle de lacet initial et en ce que la fonctionnalité de réglage de l'angle de lacet initial interagit avec un dispositif de direction électrique.

8. Dispositif selon la revendication 7, **caractérisé par** un générateur de signal sonore.

9. Dispositif selon la revendication 7 ou 8, **caractérisé par** des détecteurs d'écart (17) pour détecter des obstacles.

10. Dispositif selon l'une des revendications précédentes 7 à 9, **caractérisé en ce que** la fonctionnalité de réglage de l'angle de lacet initial est active lors du passage à côté de l'emplacement de stationnement (20).
